# EUROPÄISCHE PATENTANMELDUNG

(11) **EP 1 367 205 A2**
(43) Veröffentlichungstag der Anmeldung: **03.12.2003**
(21) Anmeldenummer: 03011287.4
(22) Anmeldetag: 17.05.2003
(51) Int. Cl.: E05F 11/38

(54) **Verbindungselement zwischen einer Stelleinrichtung und einem Stellobjekt bei einem Kraftfahrzeug**

(30) Priorität: 27.05.2002 DE 20208245 U
(71) Anmelder: Kiekert Aktiengesellschaft, 42579 Heiligenhaus (DE)
(72) Erfinder: Kasper, Andreas, 46117 Oberhausen (DE)

(57) **Zusammenfassung**

Gegenstand der Vorliegenden Erfindung ist ein Verbindungselement zwischen einer Stelleinrichtung (1) und einem Stellobjekt (2) bei einem Kraftfahrzeug, insbesondere einen Gleitstein (3, 7) zur Übertragung von Stellbewegungen z. B. eines Fensterhebers (1) auf eine Fensterscheibe (2), mit einer Aufnahme (4) für das Stellobjekt (2), und mit einem in die Aufnahme (4) eingebrachten Adhäsivmittel (5) zur Fixierung des Stellobjektes (2) in der Aufnahme (4), wobei die Aufnahme (4) einen Haftvermittler (6) für das Adhäsivmittel (5) aufweist.

## Beschreibung

Die Erfindung betrifft ein Verbindungselement zwischen einer Stelleinrichtung und einem Stellobjekt bei einem Kraftfahrzeug, insbesondere einen Gleitstein zur Übertragung von Stellbewegungen eines Fensterhebers auf ein Fenster, mit einer Aufnahme für das Stellobjekt, und mit einem in die Aufnahme eingebrachten Adhäsivmittel zur Fixierung des Stellobjektes in der Aufnahme.

Bei einem Verbindungselement der eingangs beschriebenen Gestaltung handelt es sich um ein spezielles Kupplungsteil aus Kunststoff, welches mittels eines UV-aushärtenden Klebers durch UV-Bestrahlung der Klebestelle auf der Oberfläche des Verstellobjektes und/oder einem der Verstellvorrichtung zugeordneten Teil fixiert wird. Das geschieht im Einzelnen so, dass für das Kupplungsteil ein Kunststoff verwendet wird, der sich in einen transparent amorphen Zustand mit vergleichsweise geringer mechanischer Belastbarkeit und einen nicht transparent-teilkristallinen Zustand mit vergleichsweise hoher mechanischer Belastung überführen lässt.

Das erreicht die bekannte Lehre, indem das betreffende Kupplungsteil während des Umformprozesses durch thermisches Abschrecken zunächst im transparent-amorphen Zustand gehalten wird und anschließend der Klebeprozess mittels UV-Bestrahlung durch das transparente Kupplungsteil hindurch erfolgt. Dabei wird der Kunststoff des Kupplungsteils in den nicht transparent-teilkristallinen Zustand durch eine die Kristallisation anregende Behandlung überführt. Der Abschluss des Klebeprozesses liegt vor dem Abschluss des Kristallisationsprozesses (vgl. DE 198 24 447 C2).

Auf diese Weise hofft man, die Vorteile eines unter UV-Strahlung aushärtenden Klebers auf die Verbindung zwischen dem Kupplungsteil und dem Verstellobjekt übertragen zu können. Das heißt, das Kupplungsteil soll sich ohne Zeitdruck während der Befestigung ausrichten lassen, wobei anschließend eine schnelle und dauerhafte Fixierung dennoch möglich ist. Abgesehen davon, dass das bekannte Verfahren durch die Anwendung der UV-Bestrahlung kompliziert und möglicherweise mit gesundheitsschädlichen Strahlenbelastungen verbunden ist, können nur bestimmte Kunststoffe eingesetzt werden. Das ist aufwendig und teuer. Hier will die Erfindung Abhilfe schaffen.

Der Erfindung liegt das technische Problem zugrunde, ein Verbindungselement der eingangs beschriebenen Gestaltung so weiter zu entwickeln, dass auf einfache und kostengünstige Art und Weise und ohne aufwendige Vorbehandlung eine Fixierung des Stellobjektes in der Aufnahme gelingt.

Zur Lösung dieses technischen Problems ist im Rahmen der Erfindung ein gattungsgemäßes Verbindungselement dadurch gekennzeichnet, dass die Aufnahme einen Haftvermittler für das Adhäsivmittel aufweist. In der Regel handelt es sich bei dem Haftvermittler um eine Einlage für die Aufnahme.

Dabei wirkt sich vorteilhaft aus, dass durch den Einsatz des Haftvermittlers aufwendige Vorbehandlungen des Verbindungselementes entfallen können, die zumeist der Schaffung einer polaren Oberfläche als entscheidende Voraussetzung für die Haftung des Adhäsivmittels dienen. Mit anderen Worten sorgt der Haftvermittler dafür, dass die Aufnahme in dem zumeist aus Kunststoff gefertigten Verbindungselement mit dem erforderlichen polaren Charakter ausgerüstet wird, damit einerseits der Haftvermittler bzw. die Einlage in der Aufnahme haftet und andererseits der Haftvermittler in Kombination mit dem Adhäsivmittel das Stellobjekt zuverlässig in der Aufnahme fixiert.

Dabei kommt im Detail als Haftvermittler eine Werkstoffbahn aus einem Material zum Einsatz, welches eine gegenüber dem Verbindungselement deutlich vergrößerte spezifische Oberfläche aufweist. Außerdem ist die Oberfläche in der Regel mit dem bereits angesprochenen polaren Charakter ausgerüstet und eignet sich somit chemisch besonders vorteilhaft zur Aufnahme entsprechender (ebenfalls polarer) Adhäsivmittel.

Die deutlich vergrößerte spezifische Oberfläche stellt sicher, dass für das auf die Einlage aufgebrachte Adhäsivmittel nunmehr eine erheblich größere Fläche zur Verfügung steht, als wenn dieses Adhäsivmittel direkt auf das Verbindungselement aufgebracht würde. Das gilt insbesondere für den Fall, dass das Verbindungselement aus einem Metall oder Kunststoff mit jeweils glatter Oberfläche gefertigt ist.

Die eingesetzte Werkstoffbahn stellt einerseits eine raue Oberfläche mit großem Flächeninhalt zur Verfügung, welche von dem Adhäsivmittel benetzt wird und so für die einwandfreie Fixierung des Stellobjektes sorgen kann. Andererseits wird durch die verwendete Werkstoffbahn eine Steigerung der Haftfähigkeit aufgrund ihrer chemischen Oberflächenbeschaffenheit bzw. des dort vorhandenen polaren Charakters bewirkt.

Bei dem Haftvermittler mag es sich um eine Textil-, Vlies-, oder Velourseinlage für die Aufnahme handeln. Diese besteht in der Regel aus einem mit dem Adhäsivmittel verträglichen Gewebe oder einem entsprechend gestalteten Vlies oder Velours. Dabei ist es möglich, die Textil-, Vlies- oder Velourseinlage mit der Aufnahme bzw. dem Verbindungselement selbst zu verbinden.

Grundsätzlich kann es sich bei der Einlage aber auch um einen Teppich oder ein anderes auf dem Fahrzeugsektor eingesetztes oder einsetzbares Material handeln, welches eine gegenüber dem glatten Verbindungselement vergrößerte spezifische Oberfläche und eine geeignete chemische Beschaffenheit (insbesondere polaren Charakter) besitzt.

Vorzugsweise wird zur Herstellung des Verbindungselementes inklusive Einlage jedoch auf einen einstufigen Produktionsprozess zurückgegriffen, bei dem es sich größtenteils um einen sogenannten Hinterspritzprozess handelt. Hierbei wird die Einlage in ein Werkzeug, insbesondere Spritzgießwerkzeug eingebracht. Im Anschluss daran wird das Werkzeug geschlossen, worauf abschließend der für das Verbindungselement insgesamt eingesetzte Werkstoff, insbesondere Kunststoff, von der Rückseite gegen die betreffende Einlage gespritzt wird. Folgerichtig bilden Einlage und Verbindungselement nach Abschluss dieses einstufigen Produktionsprozesses durch Hinterspritzen ein einstückiges Bauteil. Das heißt, Einlage und Verbindungselement müssen nicht (mehr) nachträglich miteinander verbunden werden, was natürlich im Rahmen der Erfindung ebenso möglich ist und abgedeckt wird.

Auf diese Weise entsteht durch das beschriebene Hinterspritzen ein einbaufertiges Formteil, nämlich das Verbindungselement.

Im Ergebnis wird ein Verbindungselement zur Verfügung gestellt, welches sich schnell und einfach mit dem Stellobjekt bzw. Fenster oder der Fensterscheibe verbinden lässt. Hierzu kann auf übliche Adhäsivmittel, also beispielsweise Kleber, zurückgegriffen werden. Aufgrund der geschilderten guten Haftung zwischen dem Haftvermittler und dem Kleber bzw. Adhäsivmittel erübrigt sich der Einsatz kostenaufwendiger Spezialkleber.

Daraus folgt, dass sich das Verbindungselement problemlos noch während des Montageprozesses genau positionieren lässt, ohne dass Fehlausrichtungen und hieraus resultierend Fehlfunktionen befürchtet werden müssen. Das beschriebene Formteil aus Verbindungselement mit Einlage lässt sich preisgünstig und in großen Stückzahlen fertigen, ohne dass es auf besondere Kunststoffe ankommt. Ursache dafür ist der Verzicht auf spezielle Bestrahlungs- oder andere physikalische oder chemische Behandlungsmaßnahmen zur Vorbehandlung des Verbindungselementes. Hierin sind die wesentlichen Vorteile zu sehen.

Im Folgenden wird die Erfindung anhand einer lediglich ein Ausführungsbeispiel darstellenden Zeichnung näher erläutert; es zeigen:

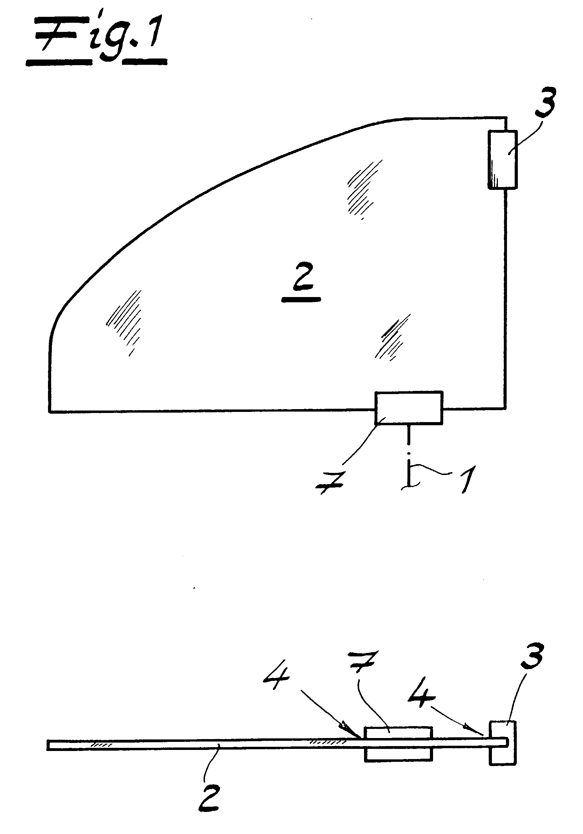

- **Fig. 1**: eine Fensterscheibe eines Kraftfahrzeuges mit daran angebrachtem Gleitstein in Seitenansicht und Aufsicht und

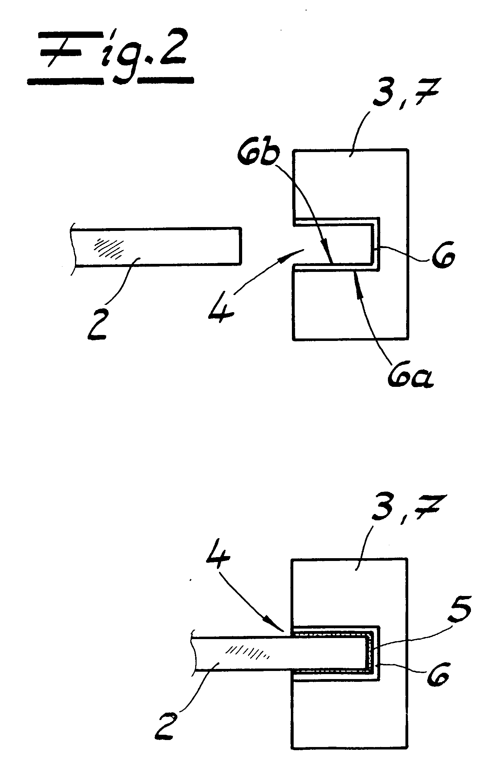

- **Fig. 2**: die verschiedenen Herstellungsschritte bei der Verbindung des Gleitsteines mit der Fensterscheibe.

In den Figuren ist ein Verbindungselement zwischen einer Stelleinrichtung 1 und einem Stellobjekt 2 bei einem Kraftfahrzeug dargestellt. Bei der Stelleinrichtung 1 handelt es sich um einen üblichen Fensterheber mit beispielsweise Seilzug, welcher eine Fensterscheibe 2 als Stellobjekt 2 gegenüber einer nicht dargestellten Kraftfahrzeugtür des Kraftfahrzeuges auf- und niederbewegt. Dazu kommt im Rahmen des Ausführungsbeispiels als Verbindungselement ein Gleitstein 7 zum Einsatz, welcher die Stellbewegungen der Stelleinrichtung bzw. des Fensterhebers 1 auf das Stellobjekt bzw. die Fensterscheibe 2 überträgt. Andererseits findet ein weiterer Gleitstein 3 Verwendung, welcher primär zur Führung der Fensterscheibe 2 dient.

Um diese Funktionen realisieren zu können, verfügt der jeweilige Gleitstein 3, 7 bzw. das Verbindungselement über eine Aufnahme 4 für das Stellobjekt 2, wobei zusätzlich ein in die Aufnahme 4 eingebrachtes und lediglich angedeutetes Adhäsivmittel 5 zum Einsatz kommt. Das Adhäsivmittel 5 dient zur Fixierung des Stellobjektes bzw. der Fensterscheibe 2 in der Aufnahme 4.

Erfindungsgemäß ist nun ergänzend noch in der Aufnahme 4 ein Haftvermittler 6 für das Adhäsivmittel 5 vorgesehen.

Bei diesem Haftvermittler 6 handelt es sich im Rahmen des Ausführungsbeispiels um eine Einlage 6, die zur Auskleidung der Aufnahme 4 eingesetzt wird. Dazu ist die Einlage 6 an die Innenkontur der Aufnahme 4 angepasst und bedeckt die Innenkontur der Aufnahme 4 nahezu vollständig, jedenfalls in dem Bereich, in welchem nachher die eingesetzte Fensterscheibe 2 mit Hilfe des Adhäsivmittels 5 festgehalten werden soll.

Im Einzelnen kann der Haftvermittler bzw. die Einlage 6 als Werkstoffbahn aus einem Material ausgebildet sein, welches eine gegenüber dem Verbindungselement bzw. dem jeweiligen Gleitstein 3, 7 deutlich vergrößerte spezifische Oberfläche aufweist. Gleichzeitig verfügt der Haftvermittler bzw. die Einlage 6 über eine geeignete chemischen Oberflächenbeschaffenheit gegenüber dem Verbindungselement bzw. dem Gleitstein 3, 7.

Die Oberfläche der Einlage bzw. des Haftvermittlers 6 beträgt pro Flächeneinheit ein Vielfaches der vergleichbaren Oberfläche des Gleitsteines 3, 7 bzw. des Verbindungselementes.

Das erreicht die Erfindung auf einfache Weise dadurch, dass es sich bei dem Haftvermittler bzw. der Einlage 6 um eine Textil-, Velours- oder Vlieseinlage für die Aufnahme 4 handelt. Grundsätzlich kann auch ein Netz aus beispielsweise Drähten, Kunststofffasern oder dergleichen als Haftvermittler bzw. Einlage 6 zum Einsatz kommen. Ebenso ist die Verwendung von Teppichboden oder vergleichbaren textilen oder nicht textilen Werkstoffen mit großer und chemisch geeigneter Oberfläche denkbar. Es versteht sich, dass es sich insofern um mit dem Adhäsivmittel 5 verträgliche Gewebe oder Vliese bzw. Werkstoffe handeln muss. Das heißt, das verwendete Adhäsivmittel darf nicht zur teilweisen oder vollständigen Auflösung der Textileinlage bzw. des Haftvermittlers 6 führen oder eben nur in einem begrenzten und beherrschbaren Umfang.

Zur Herstellung des Verbindungselementes bzw. des Gleitsteines 3, 7 wird auf einen sogenannten Hinterspritzprozess, also einen einstufigen Produktionsprozess, zurückgegriffen. Zu diesem Zweck wird die Einlage 6 in ein zugehöriges Spritzgusswerkzeug eingelegt, in welches im Anschluss daran beispielsweise Kunststoff eingespritzt wird, und zwar von der Rückseite 6a der Einlage 6 her. Demgegenüber verbleibt die Frontseite 6b der Einlage 6 (mit Kunststoff) unbenetzt.

Auf diese Frontseite 6b der Einlage 6 wird zur Vereinigung der Fensterscheibe 2 mit dem solchermaßen hergestellten Formteil bzw. Gleitstein 3, 7 das Adhäsivmittel 5 aufgebracht, beispielsweise durch Aufstreichen, Aufrakeln, Aufspritzen etc.. Dabei sorgt das an dieser Stelle eingesetzte Gewebe oder Vlies bzw. die raue Oberfläche der Einlage 6 dafür, dass der Haftvermittler bzw. die Einlage 6 ein Vielfaches an Adhäsivmittel 5 aufzunehmen in der Lage ist im Vergleich zu der Situation, dass keine Einlage 6 Verwendung findet.

Jedenfalls sorgt die Einlage bzw. der Haftvermittler 6 in Verbindung mit dem Adhäsivmittel 5 nach Einstecken der Fensterscheibe 2 in die Aufnahme 4 des Gleitsteines 3, 7 dafür, dass der Gleitstein 3, 7 eine nach Aushärtung des Adhäsivmittels 5 feste Verbindung mit der Fensterscheibe 2 eingeht.

Folglich lassen sich Stellbewegungen des Fensterhebers 1 einwandfrei über den Gleitstein 7 auf die Fensterscheibe 2 übertragen, ohne dass Ablösungen des Gleitsteins 7 von der Fensterscheibe 2, ein Verrutschen, ein alterungsbedingtes Abgleiten etc. zu befürchten sind. Ebenso ist eine sichere Führung der Fensterscheibe 2 durch den Gleitstein 3 gewährleistet.

Es versteht sich, dass das erfindungsgemäße Verbindungselement mit dem beschriebenen Haftvermittler 6 selbstverständlich auch für andere Anwendungen eingesetzt werden kann, bei welchen eine Stelleinrichtung auf ein Stellobjekt wirkt. Denkbar ist es hier beispielsweise, auf die beschriebene Art und Weise einen Spiegel zu verstellen, wobei in diesem Zusammenhang der Spiegel das Stellobjekt darstellt, welcher von einem oder mehreren Spiegelmotoren als Stelleinrichtung verfahren wird. In ähnlicher Weise lassen sich Scheinwerferverstellungen realisieren.

## Patentansprüche

1. Verbindungselement zwischen einer Stelleinrichtung (1) und einem Stellobjekt (2) bei einem Kraftfahrzeug, insbesondere Gleitstein (3, 7), mit einer Aufnahme (4) für das Stellobjekt (2), und mit einem in die Aufnahme (4) eingebrachten Adhäsivmittel (5) zur Fixierung des Stellobjektes (2) in der Aufnahme (4), **dadurch gekennzeichnet, dass** die Aufnahme (4) einen Haftvermittler (6) für das Adhäsivmittel (5) aufweist.

2. Verbindungselement nach Anspruch 1, **dadurch gekennzeichnet, dass** es sich bei dem Haftvermittler (6) um eine Einlage (6) für die Aufnahme (4) handelt.

3. Verbindungselement nach Anspruch 1 oder 2, **dadurch gekennzeichnet, dass** der Haftvermittler (6) als Werkstoffbahn aus einem Material ausgebildet ist, welches eine gegenüber dem Verbindungselement deutlich vergrößerte spezifische Oberfläche aufweist.

4. Verbindungselement nach einem der Ansprüche 1 bis 3, **dadurch gekennzeichnet, dass** es sich bei dem Haftvermittler (6) um eine Textil- oder Vlieseinlage für die Aufnahme (4), aus beispielsweise einem mit dem Adhäsivmittel (5) verträglichen Gewebe oder einem Vlies handelt.

5. Verbindungselement nach einem der Ansprüche 1 bis 4, **dadurch gekennzeichnet, dass** zu seiner Herstellung inklusive Einlage (6) ein einstufiger Produktionsprozess eingesetzt wird.

6. Verbindungselement nach Anspruch 5, **dadurch gekennzeichnet, dass** die Einlage (6) mit ihm im Zuge eines Hinterspritzprozesses verbunden wird.

7. Verbindungselement nach einem der Ansprüche 1 bis 6, **dadurch gekennzeichnet, dass** die Einlage (6) in ein Werkzeug eingebracht, das Werkzeug dann geschlossen wird und abschließend ein Werkstoff für das Verbindungselement, insbesondere Kunststoff, von der Rückseite (6a) gegen die Einlage (6) gespritzt wird.
